# EUROPÄISCHE PATENTANMELDUNG

(11) **EP 1 555 280 A2**
(43) Veröffentlichungstag der Anmeldung: **20.07.2005**
(21) Anmeldenummer: 04027402.9
(22) Anmeldetag: 18.11.2004
(51) Int. Cl.: C08G 73/04, C08L 79/02, C09D 11/00

(54) **Alkoxylierte Polyalkylenimine mit anionischen Gruppen und ihre Verwendung**

(30) Priorität: 28.11.2003 DE 10356341
(71) Anmelder: LANXESS Deutschland GmbH, 51369 Leverkusen (DE)
(72) Erfinder: Hermann, Udo, Dr., 41541 Dormagen (DE); Pfützenreuter, Dirk, 51399 Burscheid (DE); Meier, Helmut-Martin, Dr., 40883 Ratingen (DE); Witt, Josef, 51377 Leverkusen (DE); Hartrumpf, Jürgen, H., 51375 Leverkusen (DE); Gesekus, Daniela, 52428 Jülich (DE); Goldau, Gudrun-Margot, 51061 Köln (DE)

(57) **Zusammenfassung**

Polyalkylenpolyimiden mit Alkoxyeinheiten und anionischen Gruppen, insbesondere solchen aus der Gruppe bestehend aus -COO^{⊖}, -SO₃^{⊖}, -OSO₃^{⊖}, -PO₃²⁻ und -P(OR)O₂^{⊖}, wobei R für Wasserstoff oder gegebenenfalls substituiertes Alkyl, Cycloalkyl oder Aryl steht.

## Beschreibung

Die vorliegende Erfindung betrifft neue Polyalkylenimine, Verfahren zu ihrer Herstellung, ihre Verwendung als Dispergiermittel für Pigmente, sowie eine diese Polyalkylenimine enthaltende Pigmentpräparation und ihre Verwendung im Ink-Jet-Druck.

Wässrige Drucktinten für den Tintenstrahldruck sind sowohl auf Basis wasserlöslicher organischer Farbstoffe als auch auf Basis organischer Farbpigmente bekannt und weitgehend beschrieben. Gegenüber den Farbstoffen liefern Pigmente im Allgemeinen eine wesentlich höhere Licht- und Ozonstabilität der Ausdrucke. Das wichtigste Pigment für diese Anwendung ist Ruß, dessen Ink-Jet-Ausdrucke im Gegensatz zu Schwarzfarbstoffen dokumentenechter, d.h. lichtstabiler und auswaschsicherer als Farbstoffe sind.

Für eine optimale Anpassung der Pigmenttinten an das Druckmedium und zur Verhinderung der Verkrustung von Druckköpfen werden üblicherweise organische, wassermischbare Lösungsmittel zugesetzt.

Ein unerwünschter Nebeneffekt ist dabei die Konkurrenzadsorption mancher Lösungsmittel an den Pigmentteilchen, wodurch die Stabilität dieser Pigmentdispersionen erheblich verringert wird, wobei die Stabilität einer lösungsmittelhaltigen Pigmentdispersion durch Bestimmung der Flockungstemperatur ermittelt werden kann.

Funktionalisierte Pigmente beispielsweise solche aus US-A-5 554 739 und US-A-5 922 118, vermeiden die Konkurrenzadsorption, weisen aber den Nachteil der erhöhten Migrationsneigung und der damit verbundenen geringeren Wasserechtheit auf .

Aufgabe war es nun, ein Dispergiermittel für Pigmente bereitzustellen, dessen entsprechende Pigmentpräparationen eine hohe Lösungsmittelstabilität und insbesondere eine geringe Agglomerationsneigung bei einem guten Andruckverhalten besitzen.

Überraschenderweise wird die gestellte Aufgabe gelöst durch Polyalkylenpolyimine mit Alkoxyeinheiten und anionischen Gruppen, insbesondere solche aus der Gruppe bestehend aus -COO^{⊖}, -SO₃^{⊖}, -OSO₃^{⊖}, -PO₃²⁻ und -P(OR)O₂^{⊖}, wobei R für Wasserstoff oder gegebenenfalls substituiertes Alkyl, Cycloalkyl oder Aryl steht.

Als bevorzugte Kationen sind Alkali, insbesondere Natrium, Lithium und Kalium, Erdalkali wie Calcium und Magnesium sowie Ammonium wie NH₄^{⊕}, N^{⊕}HR¹R²R³ zu nennen, wobei R¹ bis R³ unabhängig voneinander für gegebenenfalls substituiertes Alkyl, insbesondere für gegebenenfalls substituiertes C₁-C₄-Alkyl, insbesondere C₁-C₄-Alkanole wie CH₂CH₃OH steht.

Besonders bevorzugt sind Kationen der Formel N^{⊕}HR¹R²R³, bei denen es sich um protoniertes Ethanolamin, Diethanolamin, Triethanolamin, N,N'-Dimethylaminoethanol, Aminopropylmethanol oder Methyldiethanolamin handelt.

Besonders gute Dispergiermittel werden erhalten, sobald im Dispergiermittel zusätzlich Amid-, Urethan- und/oder Harnstoffgruppen enthalten sind.

Bevorzugt handelt es sich bei den erfindungsgemäßen Polylalkylenpolyiminen insbesondere um solche, die ein mittleres Molekulargewicht von 500 bis 30.000 g/mol, insbesondere 800 bis 22.000, vorzugsweise 1000 bis 13000 g/mol besitzen.

Ebenfalls bevorzugt besitzt das erfindungsgemäße Polyalkylenpolyimin Ethylenoxideinheiten und Propylenoxid- und/oder Butylenoxideinheiten, insbesondere als Blockeinheit.

Die erfindungsgemäßen Polyalkylenimine können zudem auch Harnstoff- und/oder Urethangruppen enthalten, wie sie bei der Umsetzung von alkoxylierten Polyalkyleniminen mit monofunktionellen Isocyanaten wie aliphatischen oder aromatischen Isocyanaten entstehen.

Besonders bevorzugt enthält das erfindungsgemäße Polyalkylenpolyimin anionische Gruppen, die durch Umsetzung von alkoxylierten Polyalkylenpolyiminen mit Di- oder Polycarbonsäuren, insbesondere aliphatischen, cycloaliphatischen oder aromatischen oder deren Derivaten wie in beispielsweise Estern, Anhydriden oder Säurechloriden, Sulfonierungs- oder Sulfatierungsagentien wie beispielsweise Amidosulfonsäure oder Chlorsulfonsäure oder Phosphatierungsagentien wie beispielsweise POCl₃ entstehen.

In einer bevorzugten Ausführungsform ist das erfindungsgemäße Polyalkylenpolyimin dadurch erhältlich, dass ein alkoxygruppenfreies Ausgangspolyethylenimin alkoxyliert, vorzugsweise zunächst propoxyliert oder butoxyliert und anschließend ethoxyliert (wie beispielsweise in DE-A 10 026 466 beschrieben) wird, gegebenenfalls mit monofunktionellen Isocyanaten umgesetzt wird und mit Di- oder Polycarbonsäuren oder deren Derivaten, Sulfonierungs- oder Phosphatierungsagentien umgesetzt wird.

Besonders bevorzugt sind die erfindungsgemäßen Polyethylenimine, die pro mol NH-Funktion 1 bis 10 mol, insbesondere 1 bis 6 mol, vor allem 2 bis 5 mol, Propylenoxid- oder Butylenoxideinheiten aufweisen.

Der Ethylenoxidgehalt der Polyethylenimine beträgt bevorzugt 10 bis 40 mol, besonders bevorzugt 15 bis 35 mol, ganz besonders bevorzugt 20 bis 30 mol, Ethylenoxideinheiten pro mol NH-Funktion.

Besonders geeignet sind die erfindungsgemäßen Polyethylenimine, die wenigstens 12, insbesondere 20 bis 45, vor allem 25 bis 40 mol Alkylenoxideinheiten pro mol NH-Funktion enthalten.

In der Regel weist das Ausgangspolyethylenimin vor der Alkoxylierung ein mittleres Molekulargewicht von 400 bis 35 000 g/mol, bevorzugt 800 bis 20 000 g/mol, besonders bevorzugt 800 bis 12000 g/mol und ganz besonders bevorzugt etwa 2500 bis 3500 g/mol auf.

Bevorzugt sind die erfindungsgemäßen Polyalkylenpolyimine, die verzweigt sind, d.h., die vorzugsweise auf Basis eines verzweigten, d.h. tertiäre Aminogruppen enthaltenden Ausgangspolyalkylenpolyimin hergestellt worden sind.

Besonders bevorzugte erfindungsgemäße Polyalkylenpolyimine sind Polyethylenpolyimine.

Besonders bevorzugt enthalten die erfindungsgemäßen oxalkylierten Polyalkylenpolyimine, insbesondere Polyethylenpolyimine, -COO^{⊖}, -SO₃^{⊖} oder -OSO₃^{⊖}-Gruppen.

Die unmittelbar nach der Alkoxylierung erhaltenen Polyethylenimine sind beispielsweise aus der WO-A-99/67352 bekannt und können, wie dort beschrieben, hergestellt werden.

Diese alkoxylierten Polyethylenimine werden vorzugsweise mit Dicarbonsäuren, -säureanhydriden, -säurechloriden oder -säureestern wie z.B. Bersteinsäureanhydrid, Phthalsäureanhydrid, Hexahydrophthalsäureanhydrid, Amidosulfonsäure, Chlorsulfonsäure, Phosphoroxichlorid umgesetzt.

In einer weiteren bevorzugten Ausführungsform enthalten die erfindungsgemäßen Polyalkylenpolyimine Säureamideinheiten, insbesondere solche der Formel R-NR'-CO-, R-NR'-SO₂und/oder R-NR'-PO₃-, wobei R und R' für Wasserstoff oder einen Alkyl-, Cycloalkyl- oder Arylrest stehen.

Bevorzugt enthält das erfindungsgemäße alkoxylierte Polyalkylenpolyimin tertiäre -NR'-Gruppen, insbesondere -NR'-CO- oder -NR'-SO₂-Gruppen.

Die Erfindung betrifft weiterhin ein Verfahren zur Herstellung der erfindungsgemäßen Polyalkylenpolyimine, das dadurch gekennzeichnet ist, dass man alkoxylierte Polyalkylenpolyimine gegebenenfalls mit monofunktionellen Isocyanaten, insbesondere mit aliphatischen und/oder aromatischen, wie z.B. Phenylisocyanat oder Stearylisocyanat und anschließend mit einem Agenz zur Einführung anionischer Gruppen, insbesondere mit Di- und/oder Polycarbonsäure oder deren Derivate, Sulfonierungs- Sulfatierungs- oder Phosphatierungsagentien, vorzugsweise mit Dicarbonsäuren, -säureanhydriden, -säurechloriden oder -säureestern wie z.B. Bersteinsäureanhydrid, Phthalsäureanhydrid, Hexahydrophthalsäureanhydrid, Amidosulfonsäure, Chlorsulfonsäure oder Phosphoroxychlorid umsetzt.

Als bevorzugte alkoxylierte Polyalkylenpolyimine kommen die in DE-A-100 26 466 genannten in Frage.

Anionische Gruppen stark saurer Gruppen werden z.B. durch Reaktion der alkoxylierten Polyalkylenpolyimine mit Chlorsulfonsäure, Amidosulfonsäure, Phosphorsäureestern oder Phosphorsäurehalogeniden eingeführt.

Anionische Gruppen schwach saurer Gruppen werden z.B. durch Reaktion der alkoxylierten Polyalkylenpolyimine mit Di- oder Polycarbonsäuren bzw. deren Derivaten wie z.B. Estern, Anhydriden oder Säurechloriden eingeführt.

Im Falle einer Mitverwendung von monofunktonellen Isocyanaten werden alkoxyliertes Polyalkylenpolyimin und die entsprechenden Isocyanate bevorzugt im Molverhältnis von 1: 0,05 bis 1:0,9, insbesondere 1:0,1 bis 1:0,5 eingesetzt.

Die Umsetzung mit dem Isocyanat erfolgt vorzugsweise bei einer Temperatur von 20 bis 140°C, vorzugsweise bei 50 bis 90°C. Bevorzugt ist eine Reaktionszeit von 1 - 120 Minuten, vorzugsweise von 10 - 60 Minuten.

Die Umsetzung mit den Isocyanaten erfolgt vorzugsweise ohne Lösungsmittel.

Alkoxyliertes Polyalkylenpolyimin und die entsprechenden anionischen Gruppen liefernden Agentien werden bevorzugt in Molverhältnissen von 1: 0,1 bis 1:1 insbesondere 1:0,25 bis 1:1 eingesetzt.

Die Umsetzung erfolgt vorzugsweise bei 90 bis 140°C, insbesondere bei 95 bis 120°C.

Die Dispersionseigenschaften wie z.B. Filtrierbarkeit und Verdruckbarkeit sind besonders gut, wenn die Umsetzung mit den anionische Gruppen liefernden Agentien, insbesondere die mit Diund Polycarbonsäure bzw. deren Derivate bei einer Temperatur von größer gleich 110°C erfolgt, insbesondere bei 110 bis 140°C.

Das erhaltene Reaktionsgemisch wird vorzugsweise mit vollentsalztem Wasser so verdünnt, dass eine bei Raumtemperatur fließfähige Lösung entsteht. Dazu werden insbesondere 10 - 40 % Wasser, bezogen auf das Volumen des Reaktionsgemisches zugesetzt. Diese Lösung wird mit geeigneten Basen neutralisiert und auf einen pH von > 7,5 eingestellt. Zur Neutralisation werden vorzugsweise anorganische Basen wie KOH, NaOH, Ammoniak und organische Basen wie Ethanolamin, Diethanolamin, Triethanolamin, N,N'-Dimethylaminoethanol, Aminopropylmethanol, Methyldiethanolamin eingesetzt. Vorzugsweise werden salzhaltige Reaktionsmischungen, die durch Reaktionen von Säureamiden und Säurechloriden mit den alkoxylierten Polyalkyleniminen entstehen, mittels Membrantrennverfahren weitgehend entsalzt (Salzgehalt vorzugsweise kleiner als 1 %). Die Verfahrensparameter für die Entsalzung sind beispielsweise in EP-A 816406 beschrieben.

Ester- und Amidgruppen können im Infrarotspektrum des nicht neutralisierten alkoxylierten Polyalkylenpolyimins detektiert werden.

Die Erfindung betrifft weiterhin die nach dem erfindungsgemäßen Verfahren erhältlichen alkoxylierten, anionisch funktionalisierten Polyalkylenpolyimine.

Außerdem betrifft die Erfindung Pigmentpräparationen, enthaltend
A) wenigstens ein Pigment und
B) wenigstens ein erfindungsgemäßes Polyethylenpolyimin.

Die Pigmentpräparation kann dabei in fester Form, insbesondere als Pulver oder Granulat vorliegen, bevorzugt sind jedoch wässrige Pigmentpräparationen, insbesondere solche, enthaltend
A) wenigstens ein Pigment,
B) wenigstens ein erfindungsgemäßes Polyalkylenpolyimin und
C) wässriges Medium.

Als Pigmente A) kommen sowohl anorganische als auch organische partikuläre Pigmente in Frage, insbesondere solche, von denen mehr als 95 %, bevorzugt mehr als 99 % der Pigmentteilchen A) eine Teilchengröße kleiner gleich 1 µm, vorzugsweise kleiner gleich 0,5 µm, insbesondere gleich 0,2 µm besitzen.

Als organische Pigmente sind hierbei auch im Medium praktisch unlösliche Farbstoffe, insbesondere Küpenfarbstoffe zu verstehen. Selbstverständlich können die erfindungsgemäßen Pigmentpräparationen auch Mischungen verschiedener organischer oder verschiedener anorganischer Pigmente oder organischer und anorganischer Pigmente enthalten.

Beispiele für geeignete Pigmente (A) sind dabei:
Organische Pigmente:
   - Azopigmente
   - Monoazopigment:

   C.I. Pigment Brown 25;
   C.I. Pigment Orange 5, 13, 36 und 67;
   C.I. Pigment Red 1, 2, 3, 5, 8, 9, 12, 17, 22, 23, 31, 48:1, 48:2, 48:3, 48:4, 49, 49:1, 52:1, 52:2, 53, 53:1, 53:3, 57:1, 63, 112, 146, 170, 184, 210, 245 und 251;
   C.I. Pigment Yellow 1, 3, 73, 74, 65, 97, 151 und 183;

   - Disazopigmente:
      C.I. Pigment Orange 16, 34 und 44;
      C.I. Pigment Red 144, 166, 214 und 242;
      C.I. Pigment Yellow 12, 13, 14, 16, 17, 81, 83, 106, 113, 126, 127, 155, 174, 176 und 188,
   - Anthanthronpigmente:
      C.I. Pigment Red 168
      (C.I. Vat Orange 3);

   - Anthrachinonpigmente:
      C.I. Pigment Yellow 147 und 177;
      C.I. Pigment Violet 31;
   - Anthrapyrimidinpigmente:
      C.I. Pigment Yellow 108
      (C.I. Vat Yello 20),
   - Chinacridonpigmente:
      C.I. Pigment Red 122, 202 und 206;
      C.I. Pigment Violet 19;
   - Chinophthalonpigmente:
      C.I. Pigment Yellow 138;
   - Dioxazinpigmente:
      C.I. Pigment Violett 23 und 37,
   - Flavanthronpigmente:
      C.I. Pigment Yellow 24;
      (C.I. Vat Yellow 1);
Indanthronpigmente:
   C.I. Pigment Blue 60;
   (C.I. Vat Blue 4)
   und 64 (C.I. Vat Blue 6);

   - Isoindolinpigmente:
      C.I. Pigment Orange 69;
      C.I. Pigment Red 260;
      C.I. Pigment Yellow 139 und 185;
   - Isoindolinonpigmente:
      C.I. Pigment Orange 61;
      C.I. Pigment Red 257 und 260;
      C.I. Pigment Yellow 109, 110, 173 und 185;
   - Isoviolanthronpigmente:
      C.I. Pigment Violet 31;
      (C.I. Vat Violet 1);
   - Metallkomplexpigmente:
      C.I. Pigment Yellow 117, 150 und 153;
      C.I. Pigment Green 8;
   - Perinonpigmente:
      C.I. Pigment Orange 43;
      (C.I. Vat Orange 7);
      C.I. Pigment Red 194;
      (C.I. Vat 15);
   - Perylenlpigmente:
      C.I. Pigment Black 31 und 32;
      C.I. Pigment Red 123, 149, 178, 179, (C.I. Vat Red 23), 190 und 240;
      C.I. Pigment Violet 29;
   - Phthalocyaninpigmente:
      C.I. Pigment Blue 15, 15:1, 15:2, 15:3, 15:4, 15:6 und 16;
      C.I. Pigment Green 7 und 36;
   - Pyranthronpigmente:
      C.I. Pigment Orange 51;
      C.I. Pigment Red 216;
      (C.I. Vat Orange 4);
   - Thioindigopigmente:
      C.I. Pigment Red 88 und 181;
      (C.I. Vat Red 1);
      C.I. Pigment Violet 38;
      (C.I. Vat Violet 3);
   - Triarylcarboniumpigmente:
      C.I. Pigment Blue 1, 61 und 62;
      C.I. Pigment Green 1;
      C.I. Pigment Red 81, 81:1 und 169;
   - C.I. Pigment Black 1 (Anilinschwarz);
   - C.I. Pigment Yellow 101 (Aldazingelb);
   - C.I. Pigment Brown 22.
Küpenfarbstoffe (außer den bereits oben genannten):
   - C.I. Vat Yellow 2, 3, 4, 5, 9, 10, 12, 22, 26, 33, 37, 46, 48, 49 und 50;
   - C.I. Vat Orange 1, 2, 5, 9, 11, 13, 15, 19, 26, 29, 30 und 31;
   - C.I. Vat Red 2, 10, 12, 13, 14, 16, 19, 21, 31, 32, 37, 41, 51, 52 und 61;
   - C.I. Vat Violet 2, 9, 13, 14, 15, 17 und 21;
   - C.I. Vat Blue 1 (C.I. Pigment Blue 66), 3, 5, 10, 12, 13, 14, 16, 17, 18, 19, 20, 22, 25, 26, 29, 30, 31, 35, 41, 42, 43, 64, 65, 66, 72 und 74;
   - C.I. Vat Green 1, 2, 3, 5, 7, 8, 9, 13, 14, 17, 26, 29, 30, 31, 32, 33, 40, 42, 43, 44 und 49;
   - C.I. Vat Green 1, 2, 3, 5, 7, 8, 9, 13, 14, 17, 26, 29, 30, 31, 32, 33, 40, 42, 43, 44 und 49;
   - C.I. Vat Brown 1, 3, 4, 5, 6, 9, 11, 17, 25, 32, 33, 35, 38, 39, 41, 42, 44, 45, 49, 50, 55, 57, 68, 72, 73, 80, 81, 82, 83 und 84,
   - C.I. Vat Black 1, 2, 7, 8, 9, 13, 14, 16, 19, 20, 22, 25, 27, 28, 29, 30, 31, 32, 34, 36, 56, 57, 58, 63, 64 und 65
Pyrrolopyrrolpigmente
   - C.I Pigment Red 255, 254 , und 264
Anorganische Pigmente:
   - Weißpigmente:
Titandioxid (C.I. Pigment White 6), Zinkweiß, Farbenzinkoxid; Zinksulfid, Lithopone; Bleiweiß;
   - Schwarzpigmente:

   Eisenoxidschwarz (C.I. Pigment Black 11), Eisen-Mangan-Schwarz, Spinellschwarz (C.I. Pigment Black 27); Ruß
   (C.I. Pigment Black 7);

   - Buntpigmente:
      Chromoxid, Chromoxidhydratgrün; Chromgrün (C.I. Pigment Green 48); Cobaltgrün (C.I. Pigment Green 50); Ultramaringrün;
      Kobaltblau (C.I. Pigment Blue 28 und 36); Ultramarinblau; Eisenblau (C.I. Pigment Blue 27); Manganblau; Ultramarinviolett; Kobalt- und Manganviolett;
      Eisenoxidrot (C.I. Pigment Red 101); Cadmiumsulfoselenid (C.I. Pigment Red 108); Molybdatrot (C.I. Pigment Red 104); Ultramarinrot;
      Eisenoxidbraun, Mischbraun, Spinell- und Korundphaen (C.I. Pigment Brown 24, 29 und 31), Chromorange; Eisenoxidgelb (C.I. Pigment Yellow 42); Nickeltitangelb (C.I. Pigment Yellow 53; C.I. Pigment Yellow 157 und 164); Chromtitangelb; Cadmiumsulfid und Cadmiumzinksulfid (C.I. Pigment Yellow 37 und 35); Chromgelb (C.I. Pigment Yellow 34), Zinkgelb, Erdalkalichromate; Neäpelgelb; Bismutvanadat (C.I. Pigment Yellow 184);
   - Interferenzpigmente

Metalleffektpigmente auf der Basis beschichteter Metallplättchen; Perlglanzpigmente auf der Basis metalloxidbeschichteter Glimmerplättchen; Flüssigkristallpigmente.

Als bevorzugte Pigment sind dabei Monoazopigmente (insbesondere verlackte BONS-Pigmente, Naphtol-AS-Pigmente), Disazopigmente (insbesondere Diarylgelbpigmente, Bisacetessigsäureacetanilidpigmente, Disazopyrazolonpigmente), Chinacridonpigmente, Chinophthalonpigmente, Perinonpigmente, Phthalocyaninpigmente, Triarylcarboniumpigmente (Alkaliblaupigmente, verlackte Rhodamine, Farbstoffsalze mit komplexen Anionen), Isoindolinpigmente und Ruße (insbesondere Gas- oder Ofenruße) zu nennen.

Beispiele für besonders bevorzugte Pigmente sind im einzelnen: C.I. Pigment Yellow 138, C.I. Pigment Red 122, C.I. Pigment Violet 19, C.I. Pigment Blue 15:3 und 15:4, C.I. Pigment Black 7, C.I. Pigment Orange 5, 38 und 43 und C.I. Pigment Green 7 ,Pigment Yellow 139, Pigment Yellow 150, Pigment Yellow 128, Pigment Green 36, Pigment Red 177, Pigment Red 254.

Besonders bevorzugte Pigmente sind solche, die in einer 5 %igen wässrigen Anschlämmung einen pH-Wert > 6, insbesondere < 5,0 aufweisen, vorzugsweise vom Typ Ruß wie Spezialschwarz®4, Spezialschwarz®4a, Spezialschwarz®5, Spezialschwarz®6, Spezialschwarz®100, Spezialschwarz®250, Spezialschwarz®350 und Spezialschwarz 550® der Firma Degussa, sowie Farbruße der Typen FW 200, FW 2, FW 2V, FW 285, FW 1, FW 18, S 160, S 170 der Firma Degussa, Printex Typen der Firma Degussa, Pigment Yellow 150, Pigmente Yellow 74, Pigment Blue 15:3, Pigment blue 15:2, Pigment blue 15:1 sowie Pigment Red 122.

Bevorzugt besteht die feste Pigmentpräparation zu mehr als 90 Gew.-%, insbesondere mehr als 95 Gew.-% aus den beiden Komponenten A) und B).

Bevorzugt enthalten die erfindungsgemäßen Pigmentpräparationen, bezogen auf das Gewicht des Pigmentes der Komponente A), 5 bis 300 Gew.-%, insbesondere 20 bis 100 Gew.-% des erfindungsgemäßen Polyalkylenimin der Komponente B).

Für die wässrige Präparation beträgt der Anteil der Pigment-Komponente A) bevorzugt 0,5 bis 50 Gew.-%, vorzugsweise 1 bis 40 Gew.-%, besonders bevorzugt 2 bis 30 Gew.-%, bezogen auf die wässrige Präparation.

Als wässriges Medium der Komponente C) kommt entweder Wasser (C1) allein oder ein Gemisch aus Wasser mit organischen Lösungsmitteln (C2) in Frage, wobei diese vorzugsweise eine Wasserlöslichkeit von mehr als 5 g/l bei 20°C aufweisen.

Als geeignete organische Lösungsmittel (C2) der Komponente C) kommen beispielsweise in Frage:

Aliphatische C₁-C₄-Alkohole, linear oder verzweigt, Pentandiol, aliphatische Ketone wie Aceton, Methylethylketon, Diacetonalkohol, Polyole wie Ethylenglycol, Diethylenglycol, Triethylenglycol, Polyglycole mit einer Molmasse von 200-2000 g/mol, Propylenglycol, Dipropylenglycol, Tripropylenglycol, Trimethylolpropan, Glycerin, Thiodiglycol, 2-Pyrrolidon, N-Methylpyrrolidon, N-Ethylpyrrolidon, 1,3-Dimethyl-imidazolidinon, Dimethylacetamid, Dimethylformamid sowie Alkylpolyglykolether, vorzugsweise C₁-C₆-Alkylpolyglykolether, insbesondere solche mit bis zu 8 Ethereinheiten, besonders bevorzugt Butyltriglykol und/oder Butyldiglykol.

Auch Gemische der erwähnten Lösungsmittel kommen in Betracht.

Die Menge des organischen Lösungsmittels beträgt vorzugsweise 0-50 Gew.-%, insbesondere 0-35 Gew.-%, besonders bevorzugt 5 bis 15 Gew.-%, bezogen auf die Präparation. Weiterhin kann die Pigmentpräparation Mittel zur Einstellung der Viskosität enthalten wie z.B. Polyvinylalkohol, Polyvinylpyrrolidon, Methylcellulose, Xanthane, soweit sie die Stabilität, das Druckverhalten und das Trocknungsverhalten auf Papier nicht negativ beeinflussen.

Der Hauptbestandteil der bevorzugten wässrigen Pigmentpräparationen stellt vorzugsweise Wasser (C1) dar. Sein Gehalt beträgt üblicherweise 50 bis 95 Gew.-%, bevorzugt 60 bis 80 Gew.-%.

Besonders bevorzugte Pigmentpräparationen enthalten
A) wenigstens ein Pigment, insbesondere Ruß,
B) wenigstens ein erfindungsgemäßes Polyalkylenpolyimin,
C1) Wasser und
C2) wenigstens ein organisches Lösungsmittel aus der Gruppe der Alkylpolyglykolether, vorzugsweise C₁-C₆-Alkylpolyglykolether, insbesondere solche mit bis zu 8 Ethereinheiten, besonders bevorzugt Butyltriglykol und/oder Butyldiglykol und/oder Butylglycol.

Bevorzugt entsprechen mehr als 10 Gew.-% an organischem Lösungsmittel der Komponente C2), insbesondere 10 bis 50 Gew.-%, bezogen auf wässriges Medium C).

Zur Einstellung des pH-Wertes kann die Pigmentpräparation weiterhin pH-Regler wie NaOH, KOH, Aminoethanol, Aminomethylpropanol, Triethanolamin, N,N-Dimethylaminoethanol, Diethanolamin oder Methyldiethanolamin enthalten.

Als Konservierungsmittel sind beispielsweise Isothiazoline beispielsweise 1,2-Benzisothiazol-3-(2H)-on, Chlor-2-methyl-4-isothiazolin-3-on oder 2-Methyl-4-iso-thiazolin-3-on, Pentachlorphenolnatrium, 1,3,5-Triethylolhexahydro-s-triazin oder Gemische davon zu verstehen, die im Allgemeinen in einer Menge von 0-1 Gew.-%, vorzugsweise 0,05-0,5 Gew.-%, insbesondere 0,0001-0,2 Gew-% bezogen auf die Präparation eingesetzt werden.

Die Erfindung betrifft weiterhin ein Verfahren zur Herstellung der erfindungsgemäßen Pigmentpräparation, das dadurch gekennzeichnet ist, dass die Komponenten A) bis B) zusammen mit Wasser (C1) und gegebenenfalls weiteren Komponenten wie beispielsweise organischen Lösungsmitteln (C2) homogenisiert werden, anschließend gegebenenfalls von groben Partikeln befreit werden, vorzugsweise mittels einer 1-10 µm Membran, einem Glasfilter oder Papiertuch und gegebenenfalls getrocknet wird.

Zur Homogenisierung werden die Einzelkomponenten vorzugsweise in einem Dissolver angeschlagen und anschließend in einer Hochenergieperlmühle beispielsweise mit Zirkonoxidperlen gemahlen.

Die Präparation wird in der Regel danach filtriert, beispielweise über 1-10 µm Membran- oder Glasfaserfilter.

Die erfindungsgemäßen Pigmentpräparationen zeigen eine hervorragende Lagerstabilität und liefern sowohl auf thermischen bubble jet-(beispielsweise solche von HP, Encad) als auch auf Piezodruckern (beispielsweise solche von Epson, Canon oder Mutoh) Drucke mit ausgezeichneter Lichtechtheit.

Darüber hinaus besitzen sie noch folgende Vorteile: Keine Verstopfung des Druckkopfes, sowie eine hohe Wasser- und Migrationsechtheit.

Die erfindungsgemäßen wässrigen Pigmentpräparationen können vorteilhaft zum Bedrucken von flächigen oder dreidimensional gestalteten Substraten in Ink-Jet-Verfahren eingesetzt werden, welches dadurch gekennzeichnet ist, dass man die Ink-Jet-Tinten auf das Substrat aufdruckt und den erhaltenen Druck Gewünschtenfalls anschließend fixiert.

Beim Ink-Jet-Verfahren werden die üblicherweise wässrigen Tinten in kleine Tröpfchen direkt auf die Substrat gesprüht. Man unterscheidet dabei ein kontinuierliches Verfahren, bei dem die Tinte gleichmäßig durch eine Düse gepresst und durch ein elektrisches Feld, abhängig vom zu druckenden Muster, auf das Substrat gelenkt wird, und ein unterbrochener Tintenstrahl- oder "Drop-on-Demand"-Verfahren, bei dem der Tintenausstoß nur dort erfolgt, wo ein farbiger Punkt gesetzt werden soll. Bei dem letztgenannten Verfahren wird entweder über einen piezoelektrischen Kristall oder eine beheizte Kanüle (Bubble- oder Thermo-Jet-Verfahren) Druck auf das Tintensystem ausgeübt und so ein Tintentropfen herausgeschleudert. Solche Verfahrensweisen sind in Text Chem. Color, Band 19 (8), Seiten 23 bis 29, 1987, und Band 21 (6), Seiten 27 bis 32, beschrieben.

Besonders geeignet sind die erfindungsgemäßen Ink-Jet-Tinten für das Bubble-Jet-Verfahren und für das Verfahren mittels eines piezoelektrischen Kristalls.

Ist eine Fixierung des Drucks erwünscht, so kann man auf bekannte Weise und beispielsweise wie in der WO-A-99/01516 beschrieben vorgehen und z.B. ein Bindemittel, Gewünschtenfalls in Form einer Dispersion oder Emulsion, auf das bedruckte Substrat auftragen und härten oder eine Folie auflaminieren.

Weitere Einzelheiten zu diesen Bindemitteln sind der WO-A-99/01516 zu entnehmen.

Die erfindungsgemäßen wässrigen Perlpräparationen können auf alle Arten von Substratmaterialien gedruckt werden. Als Substratmaterialien seien z.B.
- cellulosehaltige Materialien wie Papier, Pappe, Karton, Holz und Holzwerkstoffe, die auch lackiert oder anderweitig beschichtet sein können,
- metallische Materialien wie Folien, Bleche oder Werkstücke aus Aluminium, Eisen, Kupfer, Silber, Gold, Zink oder Legierungen dieser Metalle, die lackiert oder anderweitig beschichtet sein können,
- silikatische Materalien wie Glas, Porzellan und Keramik, die ebenfalls beschichtet sein können,
- polymere Materialien jeder Art wie Polystyrol, Polyamide, Polyester, Polyethylen, Polypropylen, Melaminharze, Polyacrylate, Polyacrylniril, Polyurethane, Polycarbonate, Polyvinylchlorid, Polyvinylalkohole, Polyvinylacetate, Polyvinylpyrrolidone und entsprechende Copolymer und Blockcopolymere, biologisch abbaubare Polymere und natürliche Polymere wie Gelatine,
- textile Materialien wie Fasern, Garne, Zwirne, Maschenware, Webware, Non-wovens und konfektionierte Ware aus Polyester, modifiziertem Polyester, Polyestermischgewebe, cellulosehaltige Materialien wie Baumwolle, Baumwollmischgewebe, Jute, Flachs, Hanf und Ramie, Viskose, Wolle, Seide, Polyamid, Polyamidmischgewebe, Polyacrylnitril, Triacetat, Acetat, Polycarbonat, Polypropylen, Polyvinylchlorid, Polyestermikrofasern und Glasfasergewebe und Kunstleder,
- Leder, sowohl als Glatt-, Nappa- oder Velourleder,
- Lebensmittel und Kosmetika
genannt.

Die wässrigen Aufzeichnungsflüssigkeiten (Tinten) werden vorzugsweise dadurch erhalten, dass die nach dem erfindungsgemäßen Verfahren erhaltenen Pigmentpräparationen durch Zugabe von Wasser und/oder organischen Lösungsmitteln auf die gewünschte Farbstärke eingestellt wird.

### Die Messung der Flockungstemperatur

Die erfindungsgemäßen Pigmentpräparationen zeichnen sich durch eine hervoragende Flockungsstabilität aus. Bevorzugt besitzen sie eine Flockungstemperatur von > 65°C, insbesondere >80°C. Die Flockungstemperatur ist die Temperatur, bei der die Dilatationsviskosität um den Faktor von 10 gestiegen ist im Vergleich zur Dilatationsviskosität bei 20°C.

Die Messung der Flockungstemperatur wurde an einem Dilatationsviskosimeter, einem Oszillationsrheometer RS 150 der Firma Haake vorgenommen. Die Dilatationsviskosität wurde im Temperaturbereich von 20-95°C gemessen. Das Meßsystem war ein Platte- Platte-System mit einem Abstand von 0,501 mm, d.h. die zu messende Dispersion befand sich zwischen 2 kreisförmigen, parallelen Platten mit einem Abstand von 0,501 mm. Der Kraftaufnehmer (Sensor) war vom Typ PP60 93037.

Das Prinzip der Messung zusammengefasst:

Die Dispergatormoleküle sind physikalisch am Pigmentteilchen adsorbiert. Es herrscht ein Gleichgewicht zwischen den am Pigment adsorbierten Dispergiermittelmolekülen und den Dispergiermittelmolekülen in Lösung. Bei einer optimalen Dispersion bleibt dieses Gleichgewicht und damit die Stabilität der Dispersion über einen großen Temperaturbereich fast konstant.

Tritt jedoch Konkurrenzadsorption am Pigment durch Lösungsmittelmoleküle auf, so gibt es weniger Dispergiermittelmoleküle am Pigmentteilchen und mehr davon in Lösung. Dadurch steigt die Dilatationsviskosität an.

Die Messung der Flockungstemperatur über die Veränderung der Dilatationsviskosität ist ein sehr empfindlicher Indikator für die Stabilität von Dispersionen unter dem Einfluss von Lösungsmitteln.

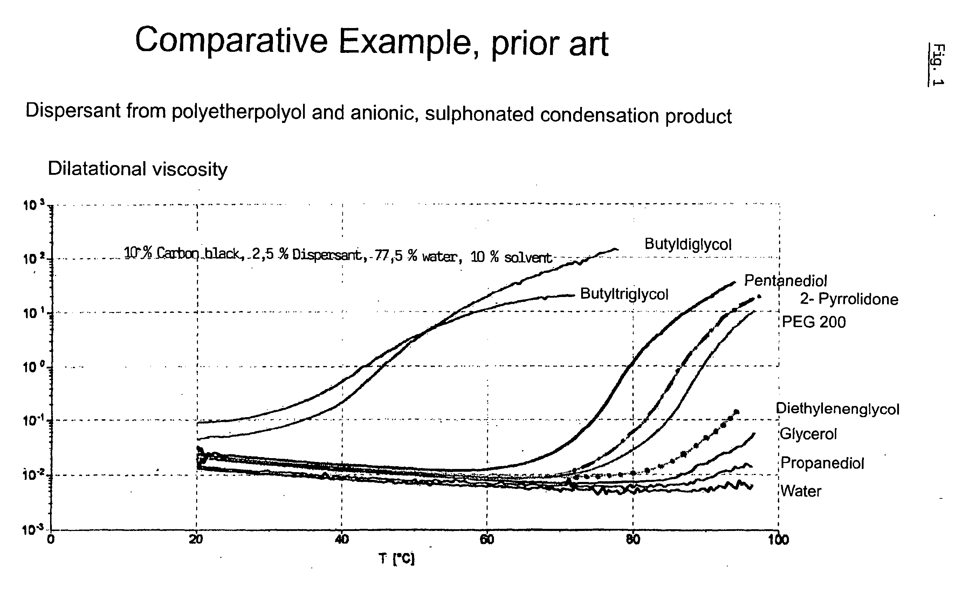

Figur 1 zeigt das Flockungsverhalten einer handelsüblichen Rußdispersion mit unterschiedlichen Lösungsmittelzusätzen. Der Ruß ist vom Typ Degussa Spezialschwarz 4, das Dispergiermittel ist ein Gemisch eines salzfreien Naphthalinsulfonsäure-Formaldehyd Kondensates und eines oxyethylierten, anionisch funktionalisierten Tristyryloxethylates. Glycerin, Diethylenglycol (DEG) und Propandiol beeinflussen das System nur wenig. Pentandiol, Polyethylenglycol 200 (PEG 200 ) und 2-Pyrrolidon setzen die Flockungstemperatur schon um mehr als 10° herab. Die amphiphilen Lösungsmittel Butyldiglycol und Butyltriglycol destabilisieren die Pigmentdispersion schon ab 20°, bei 50° beträgt die Dilatationsviskosität schon das 50-fache der wässrigen Dispersion.

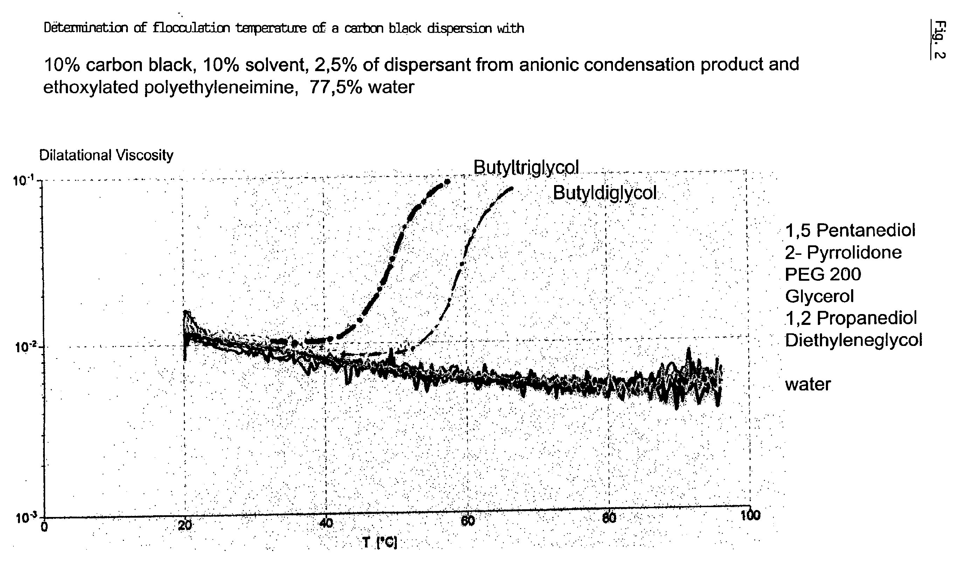

Figur 2 zeigt das Flockungsverhalten einer Rußdispersion mit einem Dispergiermittelgemisch aus oxyethyliertem Polyethylenimin (Molmasse ca. 2400 g/mol) (Dispergiermittel B2 aus DE-A 10 026 466) und einem Naphthalinsulfonsäure-Formaldehyd-Kondensat als Dispergiermittel. Der Ruß ist ein Degussa Spezialschwarz 4 Typ.

Diese Pigmentdispersion wird durch Butyldiglycol und Butlytriglycol destabilisiert.

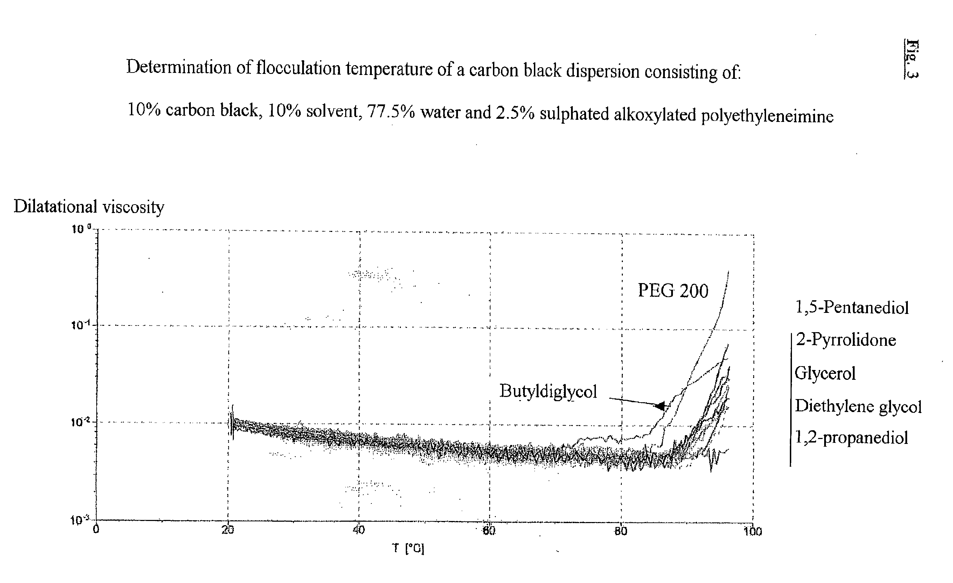

Figur 3 zeigt das Flockungsverhalten einer Rußdispersion mit einem Dispergiermittel, das durch Sulfatierung eines oxyethylierten Polyethylenimins und anschließender Entsalzung gemäß Beispiel 1 hergestellt wurde.

Der Ruß ist ein Degussa Spezialschwarz Typ 4. Bis zu 80°C ist diese Dispersion gegen alle eingesetzten Lösungsmittel stabil.

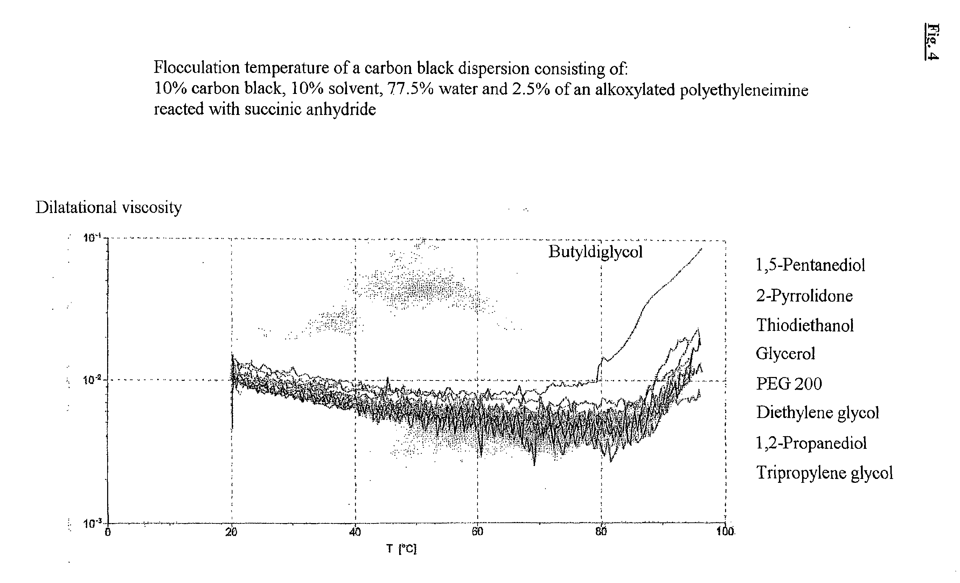

Figur 4 zeigt das Flockungsverhalten einer Rußdispersion mit einem Dispergiermittel, das durch Umsetzung von Bernsteinsäureanhydrid und einem oxyethylierten Polyethylenimin des Typs B2 aus DE-A 10026466 erhalten wurde. Der Ruß ist ein Degussa Spezialschwarz Typ 4. Auch diese Dispersion ist bis 80°C gegen alle eingesetzten Lösungsmittel stabil.

### Beispiele:

IR Spektren wurden an einem Perkin Elmer Gerät 1613 aufgenommen. Die Substanzprobe wurde mit KBr zu einer Tablette verpresst. Im Spektrum ist bei 1730 cm⁻¹ die C=O Valenzschwingung der Estergruppe und bei ca. 1640 cm⁻¹ die C=O Valenzschwingung eines Amides zu erkennen.

Basisflüssigkeit für Druckversuche von Pigmenttinten:
15 % 1,5-Pentandiol
10 % Polyglycol 200
5 % 2-Pyrrolidon
70 % vollentsalztes Wasser

### Beispiel 1 (Herstellung eines oxyalkylierten, sulfatierten Polyethylenimins)

2000 g eines wasserfreien ethoxylierten/propoxylierten Polyethylenimins (mit 1,1 % Basenstickstoff, 63 % Polyoxyethylengehalt, 1 % Polyoxypropylengehalt und einer OH-Zahl von 72) werden im Reaktionsgefäß vorgelegt und aufgeschmolzen. 278 g Amidosulfonsäure werden unter Rühren zugesetzt und die Reaktionsmischung bei 115°C 8 Stunden gerührt. Danach wird der Ansatz mit 700 g vollentsalztes VE-Wasser verdünnt und mit Ethanolamin auf einen pH von 7,5 gestellt. Diese Lösung wird auf 30 % verdünnt und dann mittels Membrantrennverfahren der Sulfatgehalt von 7 % auf unter 0,8 % gesenkt. Die Verfahrensparameter für die Entsalzung sind aus EP-A 816 406 bekannt.

### Beispiel 2 (Umsetzung eines alkoxylierten Polyethylenimins mit Bernsteinsäureanhydrid)

2000 g eines wasserfreien ethoxylierten/propoxylierten Polyethylenimins (mit 1,1 % Basenstickstoff, 63 % Polyoxyethylengehalt, 1 % Polyoxypropylengehalt und einer OH-Zahl von 72, mittlere Molmasse = 2200 g/mol) werden im Reaktionsgefäß vorgelegt und aufgeschmolzen. 140 g Bernsteinsäureanhydrid und 20 g p-Toluolsulfonsäure werden zugesetzt und das Reaktionsgemisch 5 Stunden bei 110°C gerührt. Die Säurezahl des Reaktionsgemisches wurde mit 35 ermittelt. IR Banden bei 1730 und 1650 cm⁻¹. Zu dem Reaktionsgemisch werden 630 g vollentsalztes (VE)-Wasser gegeben und die Lösung wird mit Ethanolamin auf einen pH von 8 eingestellt.

### Beispiel 3 (Umsetzung eines alkoxylierten Polyethylenimins mit Bernsteinsäureanhydrid)

2000 g eines wasserfreien ethoxylierten/propoxylierten Polyethylenimins (mit 1,1 % Basenstickstoff, 63 % Polyoxyethylengehalt, 1 % Polyoxypropylengehalt und einer OH-Zahl von 72, mittlere Molmasse = 2200 g/mol) werden im Reaktionsgefäß vorgelegt und aufgeschmolzen. 280 g Bernsteinsäureanhydrid und 20 g p-Toluolsulfonsäure werden zugesetzt und das Reaktionsgemisch 5 Stunden bei 110°C gerührt. Die Säurezahl des Reaktionsgemisches wurde mit 46 ermittelt. IR Banden bei 1730 und 1637 cm⁻¹. Zu dem Reaktionsgemisch werden 630 g vollentsalztes (VE)-Wasser gegeben und die Lösung wird mit 150 g Ethanolamin auf einen pH von 8 eingestellt.

### Beispiel 4 (Umsetzung eines alkoxylierten Polyethylenimins mit Bernsteinsäureanhydrid)

1000 g eines wasserfreien ethoxylierten/propoxylierten Polyethylenimins (mit 3 % Basenstickstoff, 55 % Polyoxyethylengehalt, 3 % Polyoxypropylengehalt und einer OH-Zahl von 172, mittlere Molmasse = 850 g/mol) werden im Reaktionsgefäß vorgelegt und aufgeschmolzen. 380 g Bernsteinsäureanhydrid und 10 g p-Toluolsulfonsäure werden zugesetzt und das Reaktionsgemisch 5 Stunden bei 115°C gerührt. Die Säurezahl des Reaktionsgemisches wurde mit 177 ermittelt. IR Banden bei 1730, 1639 und 1574 cm⁻¹. Zu dem Reaktionsgemisch werden 400 g vollentsalztes (VE)-Wasser gegeben und die Lösung wird mit Ethanolamin auf einen pH von 8 eingestellt.

### Beispiel 5 (Umsetzung eines alkoxylierten Polyethylenimins mit Phthalsäureanhydrid)

1000 g eines wasserfreien ethoxylierten/propoxylierten Polyethylenimins (mit 3 % Basenstickstoff, 55 % Polyoxyethylengehalt, 3 % Polyoxypropylengehalt und einer OH-Zahl von 172, mittlere Molmasse = 850 g/mol) werden im Reaktionsgefäß vorgelegt und aufgeschmolzen. 500 g Phthalsäureanhydridanhydrid und 10 g p-Toluolsulfonsäure werden zugesetzt und das Reaktionsgemisch 5 Stunden bei 120°C gerührt. Die Säurezahl des Reaktionsgemisches wurde mit 141 ermittelt. IR Banden bei 1723, 1640 cm⁻¹. Zu dem Reaktionsgemisch werden 500 g vollentsalztes (VE)-Wasser gegeben und die Lösung wird mit Ethanolamin auf einen pH von 7,5 eingestellt.

### Beispiel 6 (Umsetzung eines alkoxylierten Polyethylenimins mit Phenylisocyanat und anschließender Funktionalisierung mit Bernsteinsäureanhydrid)

2000 g eines wasserfreien ethoxylierten/propoxylierten Polyethylenimins (mit 1,1 % Basenstickstoff, 63 % Polyoxyethylengehalt, 1 % Polyoxypropylengehalt und einer OH-Zahl von 72, mittlere Molmasse = 2200 g/mol) werden im Reaktionsgefäß vorgelegt und aufgeschmolzen .Unter Rühren und einer Temperatur von 60°C werden innerhalb von 10 Minuten 85,2 g Phenylisocyanat zugesetzt und 1 Stunde nachgerührt. Nun werden 140 g Bernsteinsäureanhydrid und 1 g p-Toluolsulfonsäure zugesetzt und das Reaktionsgemisch 2 Stunden bei 110°C gerührt. Die Säurezahl des Reaktionsgemisches wurde mit 34 ermittelt. Zu dem Reaktionsgemisch werden 630 g vollentsalztes (VE)-Wasser gegeben und die Lösung wird mit 150 g Ethanolamin auf einen pH von 8 eingestellt.

### Beispiel 7 (Umsetzung eines alkoxylierten Polyethylenimins mit Stearylisocyanat und anschließender Funktionalisierung mit Bernsteinsäureanhydrid)

2000 g eines wasserfreien ethoxylierten/propoxylierten Polyethylenimins (mit 1,1 % Basenstickstoff, 63 % Polyoxyethylengehalt, 1 % Polyoxypropylengehalt und einer OH-Zahl von 72, mittlere Molmasse = 2200 g/mol) werden im Reaktionsgefäß vorgelegt und aufgeschmolzen. Unter Rühren und einer Temperatur von 60°C werden innerhalb von 10 Minuten 160 g Stearylisocyanat zugesetzt und 1 Stunde nachgerührt. Nun werden 140 g Bernsteinsäureanhydrid und 1 g p-Toluolsulfonsäure zugesetzt und das Reaktionsgemisch 2 Stunden bei 110°C gerührt. Die Säurezahl des Reaktionsgemisches wurde mit 31 ermittelt. Zu dem Reaktionsgemisch werden 630 g vollentsalztes (VE)-Wasser gegeben und die Lösung wird mit 150 g Ethanolamin auf einen pH von 8 eingestellt.

### Beispiel 8 (Pigmentpräparation)

100 g einer 30 % Lösung des Dispergators aus Beispiel 1 (30 g fest) und 310 g VE Wasser werden vorgelegt. Darin werden 90 g eines sauren Gasrußes mit einer BET-Oberfläche von 180 m²/g und einem pH-Wert einer 5 %igen wässrigen Anschlämmung von < 4,5 (Spezialschwarz®4 Degussa) am Dissolver eingerührt, bis der gesamte Ruß benetzt. Der pH-Wert wurde mit Ethanolamin auf ca. 7,5 eingestellt.

Im Anschluss wurde die Suspension in eine offene 11 Rührwerksmühle (Fabrikat Sussmeier, Brüssel) gegeben und mit 1,1-1,4 mm Zirkonoxidperlen 1 Stunde unter Kühlen gemahlen. Der pH-Wert wurde gegebenenfalls während der Mahlung nachgestellt. Diese Pigmentpräparation wurde zu einer Drucktinte formiert:

6,94 g Pigmentpräparation und 18,06 g Basisflüssigkeit wurden gemischt, durch 5 µm filtriert und auf einem HP 6122 Drucker auf HP Normal- und Premiumpapier ausgedruckt.

Die im Cielab-System gemessenen Werte für Y betrugen 2,6 auf Normal- und 1,9 auf Premiumpapier. Die Wiederandruckbarkeit nach 24 h bereitete keine Probleme

Y ist ein Helligkeitsparameter des als Cielab-Systems und somit ein Maß für die Farbstärke von Rußen. Je kleiner der Wert ist, desto schwärzer also farbstärker ist der Ruß auf dem Substrat (hier Papier).

Die Grundlagen der Farbmessung sind zu finden in:
Farbmessung BAYER Farben Revue, Sonderheft 3/2D (1986)

### Beispiel 9 (Pigmentpräparation)

In 3000 g VE-Wasser wurden 200 g eines Dispergiermittels nach Beispiel 3 gelöst. Nun wurden 800 g Spezialschwarz 4 (Degussa) am Dissolver eingerührt und der pH mit Ethanolamin auf 7,5 gestellt. Anschließend wurde die Dispersion in einer Perlmühle Advantis V-15 mit 0,6-0,8 mm Zirkonsilikatperlen 35 Minuten unter Kühlung im Kreislauf gemahlen. Der pH Wert wurde gegebenenfalls während der Mahlung nachgestellt. Die Rußdispersion wurde nach der Mahlung über einen Filter mit 10 µm Porengröße filtriert. 5 g Pigmentpräparation und 20 g Basisflüssigkeit wurden gemischt, durch 5 µm filtriert und auf einem HP 6122 Drucker auf Normal- und Premiumpapier verdruckt. Die im Cielab-System gemessenen Werte für Y betrugen 2,5 auf Normal- und 1,9 auf Premiumpapier. Ein Wiederandruck nach 24 h war problemlos möglich.

### Beispiel 10 (Pigmentpräparation)

In 266,8 g VE-Wasser wurden 32 g eines Dispergiermittels aus Beispiel 4 gelöst. Am Dissolver wurden dann unter Rühren 100 g Pigment Rot 122 eingerührt und der pH mit Triethanolamin auf 7,5 gestellt. Im Anschluss wurde die Suspension in eine offene 1 l Rührwerksmühle (Fabrikat Sussmeier, Brüssel) gegeben und mit 0,6-0,8 mm Zirkonoxidperlen 2 Stunden unter Kühlen gemahlen. Der pH-Wert wurde gegebenenfalls während der Mahlung nachgestellt.

Diese Pigmentpräparation wurde zu einer Drucktinte formiert: 2 g der Pigmentpräparation wurden mit 23 g der Basisflüssigkeit gemischt, über 5 µm filtriert und mit einem HP 6122 Drucker auf Normal- und Premiumpapier verdruckt. Der brillante Druck war streifenfrei und ein Wiederandruck war problemlos möglich.

| | | | | |
|---|---|---|---|---|
| Der Farbort auf Normalpapier | L=53 | a= 52 | b=-17 | C= 54,4 |
| Der Farbort auf Premiumpapier | L=44,5 | a=62,3 | b=-10 | C= 63,1 |

Der Farbort auf Normalpapier : L=53 a=52 b=-17 C=54,4
Der Farbort auf Premiumpapier L=44,5 a=62,3 b=-10 C=63,1

### Beispiel 11 (Pigmentpräparation)

In 3000 g VE Wasser wurden 274 g eines Dispergiermittels nach Beispiel 5 (200 g fest )gelöst. Nun wurden 800 g Spezialschwarz 6 (Degussa) am Dissolver eingerührt und der pH mit Ethanolamin auf 7,5 gestellt. Anschließend wurde die Dispersion in einer Perlmühle Advantis V-15 mit 1,1-1,3 mm Zirkonoxidperlen 35 Minuten unter Kühlung im Kreislauf gemahlen. Der pH-Wert wurde gegebenenfalls während der Mahlung nachgestellt. Die Rußdispersion wurde nach der Mahlung über einen Filter mit 10µm Porengröße filtriert.

5 g Pigmentpräparation und 20 g Basisflüssigkeit wurden gemischt, durch 5µm filtriert und auf einem HP 6122 Drucker auf Normal- und Premiumpapier verdruckt.

Die im Cielab-System gemessenen Werte für Y betrugen 2,8 auf Normal- und 2,2 auf Premiumpapier. Ein Wiederandruck nach 24 h war problemlos möglich.

5 g Pigmentpräparation wurden mit 20 g einer Lösung bestehend aus 20 % Glycerin, 10 % Butyldiglycol, 5 % Diethylenglycol und 65 % VE-Wasser gemischt, durch 5µm filtriert und auf einem HP 6122 Drucker auf Normal- und Premiumpapier verdruckt.

Die im Cielab-System gemessenen Werte für Y betrugen 3 auf Normal- und 2,3 auf Premiumpapier.
(vgl. dagegen Werte eines Vergleichsversuchs 2)

Gleichgute Werte wurden im Übrigen erhalten als anstelle von Butyldiglykol Butyltriglykol eingesetzt wurde.

Ein Wiederandruck war problemlos nach 24 h möglich.

### Beispiel 12 (Pigmentpräparation)

402,8 g vollentsalztes Wasser, 56,8 g einer 70,4 % Lösung eines Dispergators aus Beispiel 4 und 340,4 g eines wasserfeuchten Presskuchens von Pigment Yellow 150 werden am Dissolver angeschlagen und homogenisiert. Der pH wird mit Ethanolamin auf 8 gestellt. Die Dispersion wird 1 Stunde in einer Laborperlmühle mit 400 ml Zirkonsilikatperlen (1,1-1,3 mm Durchmesser) gemahlen. 1,875 g dieser gemahlenen Dispersion und 23,125 g Basisflüssigkeit werden gemischt, über 5 µm filtriert und auf einem HP 6122 Drucker auf Normal- und Premiumpapier verdruckt. Die Drucke waren streifenfrei und ein Wiederandruck nach 24 Stunden war problemlos möglich.

### Beispiel 13

In 286,8 g VE-Wasser werden 32 g eines Dispergiermittels aus Beispiel 2 gelöst. Am Dissolver werden dann unter Rühren 80 g Chromophtal DPP (Flammrot FP= Pigment Red 254) eingerührt und der pH mit Ethanolamin von 5,2 auf 8 gestellt. Im Anschluss wurde die Suspension in eine offene 1 l Rührwerksmühle (Fabrikat Sussmeier, Brüssel) gegeben und mit 1,1-1,25 mm Zirkonoxidperlen 2 Stunden unter Kühlen gemahlen. Der pH-Wert wurde gegebenenfalls während der Mahlung nachgestellt.

Diese Pigmentpräparation wurde zu einer Drucktinte formiert: 3,75 g der Pigmentpräparation wurden mit 21,25 g der Basisflüssigkeit gemischt, problemlos über 5µm filtriert und mit einem HP 6122 Drucker auf Normal- und Premiumpapier verdruckt.

Der brillante Druck war steifenfrei und ein Wiederandruck war problemlos möglich.

| | | | |
|---|---|---|---|
| Der Farbort auf Normalpapier | L=60, | a= 54,3 | b= 25,92 |
| Der Farbort auf Premiumpapier | L=57,1 | a=57,8 | b=30,9 |

### Vergleichsbeispiel 1 (nur oxalkyliertes Polyethylenimin)

In 2871 g VE-Wasser wurden 416,9 g eines oxyethylierten/oxypropylierten Polyethylenimins (mit 1,1 % Basenstickstoff, 63 % Polyoxyethylen, 1 % Polyoxypropylen) gelöst. Nun wurden 1100 g eines sauren Gasrußes mit einer BET-Oberfläche von 180 m2²/g (pH-Wert einer 5 %igen Anschlämmung ist < 4,5) am Dissolver eingerührt und der pH mit Ethanolamin auf 7,5 gestellt. Anschließend wurde die Dispersion in einer Perlmühle Advantis V 15 mit 0,6-0,8 mm Zirkonsilikatperlen 60 Minuten im Kreislauf gemahlen. Der pH-Wert wurde gegebenenfalls während der Mahlung nachgestellt. 5 g Pigmentpräparation und 20 g Basisflüssigkeit wurden gemischt, durch 5 µm filtriert und auf einen HP 6122 Drucker auf Normal- und Premiumpapier verdruckt. Die im Cielab-System gemessenen Werte für Y betrugen 9,5 auf Normal- und 3 auf Premiumpapier. Ein Wiederandruck nach 24 h war problemlos möglich.

### Vergleichsbeispiel 2

In 3800 g VE Wasser wurden 60 g eines oxyethylierten/oxypropylierten Polyethylenimins (mit 1,1 % Basenstickstoff, 63 % Polyoxyethylen, 1 % Polyoxypropylen) und 240 g eines salzfreien Naphthalinsulfonsäure-Formaldehyd Kondensates gelöst. Nun wurden 900 g eines sauren Gasrußes mit einer BET-Oberfläche von 180 m2²/g (pH-Wert einer 5 %igen Anschlämmung ist < 4,5) am Dissolver eingerührt und der pH mit Ethanolamin auf 7,5 gestellt (siehe Abbildung 2). Anschließend wurde die Dispersion in einer Perlmühle Advantis V 15 mit 0,6-0,8 mm Zirkonsilikatperlen 60 Minuten im Kreislauf gemahlen. Der pH-Wert wurde gegebenenfalls während der Mahlung nachgestellt. 5 g Pigmentpräparation und 20 g Basisflüssigkeit wurden gemischt, durch 5 µm filtriert und auf einen HP 6122 Drucker auf Normal- und Premiumpapier verdruckt. Die im Cielab-System gemessenen Werte für Y betrugen 3,5 auf Normal- und 2,7 auf Premiumpapier. Ein Wiederandruck nach 24 h war problemlos möglich. 5 g Pigmentpräparation wurden mit 20 g einer Lösung bestehend aus 20 % Glycerin, 10 % Butyldiglycol, 5 % Diethylenglycol und 65 % VE-Wasser gemischt, durch 5µm filtriert und auf einem HP 6122 Drucker auf Normal- und Premiumpapier verdruckt. Die im Cielab-System gemessenen Werte für Y betrugen 4,3 auf Normal- und 3,3 auf Premiumpapier. Ein Wiederandruck war problemlos nach 24 h möglich.

## Patentansprüche

1. Polyalkylenpolyimine mit Alkoxyeinheiten und anionischen Gruppen, insbesondere solche aus der Gruppe bestehend aus -COO^{⊖}, -SO₃^{⊖}, -OSO₃^{⊖}, -PO₃²⁻ und -P(OR)O₂^{⊖}, wobei R für Wasserstoff oder gegebenenfalls substituiertes Alkyl, Cycloalkyl oder Aryl steht.

2. Polyalkylenpolyimine nach Anspruch 1, **dadurch gekennzeichnet, dass** es verzweigte Polyethylenpolyimine sind.

3. Polyalkylenpolyimine nach wenigstens einem der Ansprüche 1 bis 2, **dadurch gekennzeichnet, dass** sie Amidgruppen und/oder Urethangruppen und/oder Harnstoffgruppen enthalten.

4. Polyalkylenpolyimine nach wenigstens einen der Ansprüche 1 bis 3, **dadurch gekennzeichnet, dass** es Ethoxy- und Propoxy- und/oder Butoxy-Einheiten enthält.

5. Polyalkylenpolyimine nach wenigstens einem der Ansprüche 1 bis 4, **dadurch gekennzeichnet, dass** sie pro NH-Funktion 1-10 mol Propylenoxid- oder Butylenoxideinheiten und 10-40 Mol Ethylenoxideinheiten aufweisen.

6. Polyalkylenpolyimine nach wenigstens einem der Ansprüche 1 bis 5, **dadurch gekennzeichnet, dass** sie als anionische Gruppe -COO^{⊖} enthalten.

7. Polyalkylenpolyimine nach wenigstens einem der Ansprüche 1 bis 6, **dadurch gekennzeichnet, dass** sie ein mittleres Molekulargewicht von 800 bis 30.000 g/mol besitzen.

8. Verfahren zur Herstellung von Polyalkylenpolyimine nach wenigstens einem der Ansprüche 1 bis 7, **dadurch gekennzeichnet, dass** man ein alkoxyliertes Polyalkylenpolyimin mit einem Agenz zur Einführung anionischer Gruppen, insbesondere mit Di- oder Polycarbonsäuren oder deren Derivate, Sulfonierungs-, Sulfatierungs- oder Phosphatierungsagentien umsetzt.

9. Polyalkylenpolyimine erhältlich nach dem Verfahren gemäß Anspruch 8.

10. Pigmentpräparationen, enthaltend
A) wenigstens ein Pigment,
B) wenigstens ein alkoxyliertes Polyalkylenimin nach wenigstens einem der Ansprüche 1 bis 7 oder 9.

11. Pigmentpräparation gemäß Anspruch 10 enthaltend ein Pigment, das beim Anschlagen in Wasser in einer 5 gew.-%igen Konzentration einen pH < 6 hat.

12. Pigmentpräparation gemäß wenigstens einem der Ansprüche 10 bis 11, enthaltend die Komponente B) in einer Menge von 1 bis 200 Gew.-%, bezogen auf das Pigment der Komponente A).

13. Pigmentpräparation gemäß wenigstens einem der Ansprüche 10 bis 12, enthaltend ein wässriges Medium C), vorzugsweise in einer Menge von 1 bis 98 Gew.-%, bezogen auf die Präparation.

14. Pigmentpräparationen gemäß wenigstens einem der Ansprüche 10 bis 13, **dadurch gekennzeichnet**, das dass wässrige Medium C) Wasser C1) und wenigstens ein organisches Lösungsmittel C2), insbesondere Butyldiglykol und/oder Butyltriglykol enthält.

15. Verfahren zur Herstellung von Pigmentpräparationen gemäß wenigstens einem der Ansprüche 10 bis 14, **dadurch gekennzeichnet, dass** die Komponente A) und B) in Gegenwart von Wasser C1) und gegebenenfalls C2) homogenisiert werden, gegebenenfalls von groben Partikeln vorzugsweise mittels Membranen oder Glasfilter, befreit werden und gegebenenfalls die Pigmentpräparation getrocknet wird.

16. Verwendung der Pigmentpräparation gemäß wenigstens einem der Ansprüche 10 bis 14 zum Bedrucken von flächigen oder dreidimensional gestalteten Substraten insbesondere Papier mittels Ink-Jet-Verfahren.
